(19) **Europäisches Patentamt**

**European Patent Office**

**Office européen des brevets**

(11) **EP 0 989 365 B1**

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(51) Int Cl.⁷: $F23J\ 15/02$, $F23C\ 9/00$

(21) Anmeldenummer: **98810955.9**

(22) Anmeldetag: **23.09.1998**

(54) **Verfahren zur Entstickung von Rauchgasen**

Process for flue gases denitration

Procédé de dénitration de gaz de combustion

(84) Benannte Vertragsstaaten:
**AT BE CH DE DK ES FI FR GB IT LI NL SE**

(43) Veröffentlichungstag der Anmeldung:
**29.03.2000 Patentblatt 2000/13**

(73) Patentinhaber: **Alstom**
**75116 Paris (FR)**

(72) Erfinder: **Rüegg, Hans**
**5610 Wohlen (CH)**

(74) Vertreter:
**Zmyj, Erwin, Dipl.-Ing., Dipl.-Wirtsch.-Ing.,**
**European Patent Attorney**
**Rosenheimer Strasse 52**
**81669 München (DE)**

(56) Entgegenhaltungen:
**WO-A-90/05000        DE-U- 8 612 710**
**FR-A- 2 360 045        US-A- 5 240 689**
**US-A- 5 685 243**

## Beschreibung

### Technisches Gebiet

Die Erfindung betrifft ein Verfahren zur Entstickung von Rauchgasen von Verbrennungsanlagen, insbesondere Müllverbrennungsanlagen, nach dem SNCR-Verfahren, bei dem ein Reduktionsmittel mittels eines Zerstäubungsmittels in das Rauchgas eingedüst wird.

### Stand der Technik

Zur Entstickung von Rauchgasen aus Verbrennungsanlagen, insbesondere Müllverbrennungsanlagen, werden heute zwei verschieden Verfahren eingesetzt. Dies sind die katalytische Entstickung (SCR - Selective Catalytic Reduction) und die nichtkatalytische Entstickung (SNCR - Selective Noncatalytic Reduction). Beide Verfahren arbeiten mit Ammoniak bzw. ammoniakalischer wässriger Lösung oder Harnstoff als Reduktionsmittel und reduzieren die Stickstoffoxide im Rauchgas zu $N_2$ und $H_2O$ (K. J. Thomé-Kozmiensky: Thermische Abfallbehandlung. EF Verlag für Energie- und Umwelttechnik GmbH, 2. Auflage, 1994, S. 552-555).

Beim SNCR-Verfahren wird das Reduktionsmittel in den Feuerraum der Verbrennungsanlage geleitet. Dort reagiert es mit den vorgängig gebildeten Stickoxiden zu Stickstoff und Wasserdampf. Diese Reaktion läuft im Temperaturbereich von 700 bis 1100 °C ab, beim Einsatz von Ammoniak als Reduktionsmittel bevorzugt zwischen 850 und 950 °C, wobei bei 920 °C ein Optimum liegt. Die Verteilung des Reaktionsmittels in den Feuerraum geschieht üblicherweise mittels Zweistoffdüsen, die auf der Aussenseite des Feuerraumes angebracht sind und als Zerstäubungsmedium entweder Pressluft oder Wasserdampf einsetzen. Die Kosten für den Einsatz dieser beiden Zerstäubungsmedien sind nachteilig hoch, da wegen der grossen Abmessungen des Reaktionsraumes relativ grosse Mengen davon benötigt werden.

Aus WO 90/05000 und US 5,240,689 sind Verfahren zur Rauchgasreinigung bekannt, bei welchen rezirkuliertes Rauchgas als Transport- und Zerstäubungsmedium für die Chemikalien (Reduktionsmittel) verwendet wird. Dies führt vorteilhaft zu einer Senkung der Kosten, denn rezirkuliertes Rauchgas kann nahezu kostenfrei auch in grossen Mengen eingesetzt werden. Die Einmischung des Reaktionsmittels in den zu entstickenden Rauchgasstrom mit einer vergrösserten Eindüsemenge, wie sie aus Kostengründen mit Pressluft oder Dampf nicht möglich ist, wird dadurch verbessert.

Ein weiteres Problem beim Einsatz des SNCR-Verfahrens in Müllverbrennungsanlagen besteht darin, dass beim Verbrennen von Müll die Stickoxide zum überwiegenden Teil aus dem Brennstoffstickstoff entstehen und dass wegen der Inhomogenität des Mülls die Entstehung äusserst ungleichmässig örtlich und auch zeitlich sehr stark schwankend erfolgt. Dies führt dazu, dass die Konzentrationen im Rauchgas ebenfalls sehr stark schwanken.

Um bei diesen Bedingungen noch eine genügend gute Reduktionswirkung zu erreichen, ist es notwendig, dass das Reduktionsmittel in grossem Überschuss zugegeben wird. Dies führt unweigerlich zu einem grossen Ammoniakschlupf im Rauchgas, der zur Vermeidung von Ammoniakemissionen in der nachgeschalteten Rauchgasreinigung wieder aufwendig abgeschieden werden muss.

Schliesslich treten zusätzlich grosse Temperatur- und Leistungsschwankungen im Bereich der Nachbrennkammer und der Eindüsestellen für das Reaktionsmittel auf. Die führt dazu, dass sich das für die Reaktion optimale Temperaturfenster ständig verschiebt und die Temperatur an der Eindüsestelle somit nicht konstant bleibt. Um den örtlichen Schwankungen des optimalen Temperaturfeldes folgen zu können, wird daher das Reduktionsmittel auf mehreren Ebenen in den Feuerraum eingedüst. Diese Ebenen werden der jeweiligen Temperatur entsprechend zu- oder abgeschaltet. Der Nachteil dieser Lösung besteht darin, dass einerseits zusätzliche Öffnungen an den Seitenwänden installiert werden müssen und andererseits der verfahrenstechnische Aufwand beträchtlich ist. Gemäss WO 90/0500 und US 5,240,689 wird zur Temperaturregelung des Rauchgases Wasser eingedüst bzw. die Chemikalienmenge variiert, wobei letzteres recht aufwendig ist.

### Darstellung der Erfindung

Die Endung versucht, alle diese Nachteile zu vermeiden. Ihr liegt die Aufgabe zugrunde, ein Verfahren zur Entstickung der Rauchgase von Verbrennungsanlagen nach dem SNCR-Verfahren, bei dem ein Reduktionsmittel mittels eines Zerstäubungsmittels über eine Eindüsestelle in das Rauchgas eingedüst wird, wobei als Zerstäubungsmittel rezirkuliertes Rauchgas eingesetzt wird, anzugeben, welches kostengünstig ist und mit welchem ohne grossen verfahrenstechnische und apparativen Aufwand eine konstante Temperatur des Rauchgases an der Eindüsestelle und im Bereich der Nachbrennkammer erreicht wird.

Erfindungsgemäss wird dies bei einem Verfahren gemäss Oberbegriff des Patentanspruches 1 dadurch erreicht, dass zwecks Konstanthalten der Temperatur an der Eindüsestelle (16) die Menge des rezirkulierten Rauchgases (10) und/oder die Menge der Sekupdärluft (11) variiert wird.

Die Vorteile der Erfindung bestehen darin, dass das Verfahren einerseits sehr kostengünstig ist, denn rezirkuliertes Rauchgas kann nahezu kostenfrei auch in grossen Mengen eingesetzt werden. Die Einmischung des Reaktionsmittels in den zu entstickenden Rauchgasstrom mit einer vergrösserten Eindüsemenge, wie sie aus Kostengründen mit Pressluft oder Dampf nicht möglich ist, wird dadurch verbessert. Gleichzeitig wird durch diese Massnahme auch eine zusätzliche Vermischung und Homogenisierung der Rauchgase selbst erreicht, wodurch die NOxund Temperaturschwankungen im zu entstickenden Rauchgasstrom ausgeglättet werden können.

Die Verwendung einer relativ grossen Menge an rezirkuliertem Rauchgas ermöglicht neben den o. g. Vorteilen gleichzeitig eine Einflussnahme auf die Temperatur an der Eindüsestelle. Durch Variieren der eingedüsten Menge kann die Rauchgastemperatur an der Eindüsestelle konstant im für die Entstickungsreaktion optimalen Temperaturbereich gehalten werden. Daher ist es nicht mehr notwendig, mittels mehrere Eindüseebenen dem Reaktionsfenster nachzufahren.

Üblicherweise wird stromaufwärts der Eindüsestelle Sekundärluft zugeführt. Durch Variation der Menge an Sekundärluft wird erreicht, dass im Teillastbetrieb, wenn das optimale Temperaturfenster sich in Richtung der Sekundärlufteindüsestelle verschiebt, weniger Sekundärluft zugeführt wird, was im Teillastbereich auch den Anforderungen der Feuerung entspricht.

Ausserdem ist es zweckmässig, wenn das rezirkulierte Rauchgas stromabwärts des Staubabscheiders der Verbrennungsanlage entnommen wird, da das Rauchgas dann nicht mehr mit Staubpartikeln beladen ist, welche den Ablauf der Entstickungsreaktion hemmen könnten.

Von Vorteil ist weiterhin, wenn Ammoniaklösung in einem Verdampfer verdampft wird und anschliessend dem rezirkulierten Rauchgas zugesetzt wird, weil dadurch Auskondensationen in den Zuführleitungen verhindert werden können.

Schliesslich ist es vorteilhaft, wenn zwecks Konstanthalten des NOx-Gehaltes des Rauchgases stromabwärts der Eindüsestelle die Menge des zugesetzten Reduktionsmittels variiert wird. Dies ist eine einfache Methode, vorgegebene NOx-Werte einzuhalten.

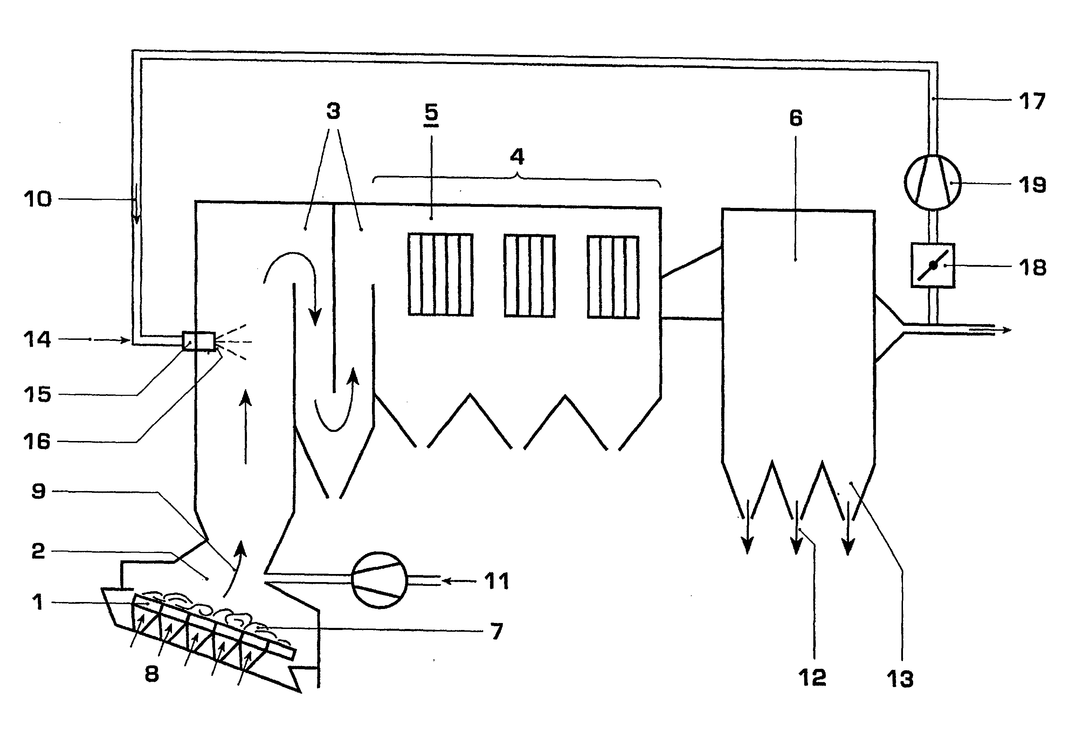

## Kurze Beschreibung der Zeichnung

In der Zeichnung ist ein Ausführungsbeispiel der Erfindung anhand einer Müllverbrennungsanlage dargestellt. Es sind nur die für das Verständnis der Erfindung wesentlichen Elemente gezeigt. Die Strömungsrichtung der Medien ist mit Pfeilen bezeichnet.

## Weg zur Ausführung der Erfindung

Nachfolgend wird die Erfindung anhand von Ausführungsbeispielen und der Figur näher erläutert.

Die einzige Figur zeigt schematisch einen Teil einer Müllverbrennungsanlage, in der eine nichtkatalytische Entstickung der Verbrennungsgase stattfindet. Die Anlage besteht aus einem Verbrennungsrost 1, über dem sich ein Feuerraum 2 erstreckt, an den sich zwei vertikale Leerzüge 3 und ein horizontaler Bündelzug 4 eines Kessels 5 anschliessen. Der Ausgang des Kessels 5 ist mit dem Eingang eines Staubabscheiders 6, in diesem Falle einem Elektrofilter, verbunden.

Brenngut 7, im vorliegenden Ausführungsbeispiel Müll, wird auf den Verbrennungsrost 1 aufgegeben und unter Zufuhr von Primärluft 8 verbrannt. Dabei entstehen Rauchgase 9. Um einen vollständigen Ausbrand zu gewährleisten, wird in den Feuerraum 2 Sekundärluft 11 eingeblasen. Die Rauchgase 9 gelangen dann durch die vertikalen Leerzüge 3 und den horizontalen Bündelzug 4 des Kessels 5 in den Staubabscheider 6, in dem die noch im Rauchgas 9 enthaltenen Staubpartikel 12 abgeschieden und über Trichter 13 ausgetragen werden. Das vom Staub 12 befreite Rauchgas strömt anschliessend in einen nicht dargestellten Wäscher, in welchem die Rauchgasentschwefelung stattfindet. Insoweit ist das Verfahren bekannt. Bekannt ist auch die nichtkatalytische Entstickung der Rauchgase 9 durch Zufuhr eines Reduktionsmittels 14, in unserem Ausführungsbeispiel Ammoniak, in den Feuerraum 2. Der Ammoniak 14 wird dabei über eine in der Kesselwand angebrachte Zweistoffdüse 15 mittels eines unter Druck stehenden Zerstäubungsmittels in die zu entstickenden Rauchgase 9 eingedüst.

Als Zerstäubungsmittel wird rezirkuliertes Rauchgas 10 eingesetzt, wobei nur eine einzige Eindüsestelle 16 im Feuerraum 2 vorgesehen ist. Das rezirkulierte Rauchgas 10 wird stromabwärts des Staubabscheiders 6 entnommen und über ein Gebläse 19, eine Leitung 17 und eine Regelklappe 18 der Düse 15 zugeführt. In die Leitung 17 wird das Reduktionsmittel 14 (gasförmiges Ammoniak) eingebracht und dort mit dem rezirkulierten Rauchgas 10 vermischt wird. Das rezirkulierte Rauchgas 10 dient als Zerstäubungsmittel, mit Hilfe dessen das Ammoniak 14 an idealer Stelle (Eindüsestelle 16) in den Feuerraum 2 eingebracht wird.

Die Vermischung zweier Gasströme ist umso besser, je näher das Impulsstromverhältnis J

$$J = \rho_j * v_j^2 / \rho_m * v_m^2$$

zwischen dem eingedüsten Gasstrom J und dem Hauptgasstrom m bei 1 liegt ($\rho$ = Gasdichte und v = Gasgeschwindigkeit). Da rezirkuliertes Rauchgas 10 nahezu kostenfrei in grossen Mengen zur Verfügung steht, kann die Einmischung des gasförmigen Reduktionsmittels 14 in den zu entstickenden Rauchgasstrom 9 mit einer vergrösserten Eindüsemenge vorgenommen werden, was aus Kostengründen mit Pressluft oder Dampf (bisheriger Stand der Technik) nicht möglich ist, und somit die Vermischung der Gasströme verbessert werden. Gleichzeitig wird durch diese Massnahme eine zusätzliche Vermischung und Homogenisierung der Rauchgase selbst erreicht, wodurch die NOx- und Temperaturschwankungen im zu entstickenden Rauchgas geglättet werden.

Durch eine grosse Variation der Menge an rezirkuliertem Rauchgas 10 ist es möglich, die Temperatur an der Eindüsestelle 16 konstant in dem für den Ablauf der Entstickungsreaktion optimalen Temperaturbereich zu halten. Daher ist es nicht mehr notwendig, mittels mehrerer Eindüseebenen dem Reaktionstemperaturfenster nachzufahren, sondern es reicht eine Eindüsestelle 16.

Dieser Effekt kann auch erreicht werden durch Variation der stromaufwärts der Eindüsestelle 16 zugeführten Menge an Sekundärluft 11.

Eine besonders gute Vermischung wird erreicht, wenn in der ersten Ebene die Sekundärluft 11 mit einem Drall behaftet in den Feuerraum eingedüst wird und in der zweiten Ebene das Rauchgas 10 mit einem Gegendrall zur Sekundärluft 11 eingedüst wird.

In einem anderen Ausführungsbeispiel kann anstelle des gasförmigen Ammoniaks 14 als Reduktionsmittel eine Ammoniaklösung in einem Verdampfer verdampft und anschliessend dem rezirkuliertem Rauchgas 10 zugesetzt werden.

Durch Veränderung der Menge des zugesetzten Reduktionsmittels 14 ist es möglich, den NOx-Gehalt den $NH_3$-Gehalt im Rauchgas stromabwärts der Eindüsestelle 16 konstant zu halten.

## Bezugszeichenliste

1     Verbrennungsrost
2     Feuerraum
3     vertikaler Leerzug
4     horizontaler Bündelzug
5     Kessel
6     Staubabscheider
7     Müll
8     Primäriuft
9     Rauchgas
10    rezirkuliertes Rauchgas
11    Sekundärluft
12    Staub
13    Trichter
14    Reduktionsmittel
15    Düse
16    Eindüsestelle
17    Leitung für Pos.10
18    Regelklappe
19    Gebläse

## Patentansprüche

1.  Verfahren zur Entstickung der Rauchgase (9) von Verbrennungsanlagen nach dem SNCR-Verfahren, bei dem ein Reduktionsmittel (14) mittels eines Zerstäubungsmittels über eine Eindüsestelle (16) in das Rauchgas (9) eingedüst wird, wobei als Zerstäubungsmittel rezirkuliertes Rauchgas (10) verwendet wird und stromaufwärts der Eindüsestelle (16) Sekundärluft (11) zugeführt wird, **dadurch gekennzeichnet, dass** zwecks Konstanthalten der Temperatur an der Eindüsestelle (16) die Menge des rezirkulierten Rauchgases (10) und/oder die Menge der Sekundärluft (11) variiert wird.

2.  Verfahren nach Anspruch 1, **dadurch gekennzeichnet, dass** das rezirkulierte Rauchgas (10) stromabwärts eines Staubabscheiders (6) der Verbrennungsanlage entnommen wird.

3.  Verfahren nach Anspruch 1 oder 2, **dadurch gekennzeichnet, dass** Ammoniaklösung in einem Verdampfer verdampft wird und anschliessend dem rezirkulierten Rauchgas (10) zugesetzt wird.

4.  Verfahren nach Anspruch 1, **dadurch gekennzeichnet, dass** zwecks Konstanthalten des NOx-Gehaltes des Rauchgases (9) stromabwärts der Eindüsestelle (16) die Menge des zugesetzten Reduktionsmittels (14) variiert wird.

## Claims

1.  Process for deNOxing the flue gases (9) from incineration plants using the SNCR process, in which a reducing agent (14) is injected into the flue gas (9) by means of an atomization agent via an injection point (16), recirculated flue gas (10) being used as the atomization agent, and secondary air (11) being supplied upstream of the injection point (16), **characterized in that**, in order to keep the temperature constant at the injection point (16), the amount of recirculated flue gas (10) and /or the amount of secondary air (11) is varied.

2.  Process according to Claim 1, **characterized in that** the recirculated flue gas (10) is removed downstream of a dust separator (6) of the incineration plant.

3.  Process according to one of Claims 1 and 2, **characterized in that** ammonia solution is evaporated in an evaporator and is then added to the recirculated flue gas (10).

4.  Process according to Claim 1, **characterized in that**, in order to keep the NOx level in the flue gas (9) constant downstream of the injection point (16), the amount of reducing agent (14) added is varied.

## Revendications

1.  Procédé de dénitration de gaz de combustion (9) d'installations de combustion selon le procédé SNCR, dans lequel un agent réducteur (14) est injecté au moyen d'un agent pulvérisateur par le biais d'une zone d'injection (16) dans le gaz d e combustion (9), du gaz de combustion (10) recirculé étant utilisé comme agent pulvérisateur, et de l'air secondaire (11) est introduit en amont de la zone d'injection (16), **caractérisé en ce qu'**afin de maintenir constante la température au niveau de la zone d'injection (16), on fait varier la quantité du gaz de combustion recirculé (10) et/ou la quantité d'air secondaire (11).

2. Procédé selon la revendication 1, **caractérisé en ce que** le gaz de combustion recirculé (10) est prélevé en aval d'un séparateur de poussière (6) de l'installation de combustion.

3. Procédé selon l'une quelconque des revendications 1 à 2, **caractérisé en ce qu'**une solution d'ammoniaque est évaporée dans un évaporateur et est ensuite ajoutée au gaz de combustion recirculé (10).

4. Procédé selon la revendication 1, **caractérisé en ce qu'**afin de maintenir constante la teneur en NOx du gaz de combustion (9) en aval de la zone d'injection (16), on fait varier la quantité d'agent réducteur (14) ajoutée.